(19) Europäisches Patentamt
European Patent Office
Office européen des brevets

(11) EP 3 463 873 B1

(12) **EUROPEAN PATENT SPECIFICATION**

(45) Date of publication and mention of the grant of the patent:
**25.03.2020 Bulletin 2020/13**

(21) Application number: **17727798.5**

(22) Date of filing: **09.05.2017**

(51) Int Cl.:
***B32B 27/08*** *(2006.01)* ***B32B 27/30*** *(2006.01)*
***B32B 27/32*** *(2006.01)* ***B65B 53/00*** *(2006.01)*
***B65B 9/13*** *(2006.01)*

(86) International application number:
**PCT/EP2017/060983**

(87) International publication number:
**WO 2017/202597 (30.11.2017 Gazette 2017/48)**

# (54) FILM FOR STRETCH HOOD APPLICATIONS

FILM FÜR STRETCHHAUBENANWENDUNGEN

FILM POUR HOUSSE ÉTIRABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2016 EP 16171219**

(43) Date of publication of application:
**10.04.2019 Bulletin 2019/15**

(73) Proprietor: **Basell Poliolefine Italia S.r.l.**
**20121 Milano (IT)**

(72) Inventors:
- **GALVAN, Monica**
  **44122 Ferrara (IT)**
- **PERDOMI, Gianni**
  **44122 Ferrara (IT)**
- **CAVALIERI, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A2-2007/044544**
**US-A1- 2010 203 309**
**US-A1- 2011 041 460**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 463 873 B1

## Description

FIELD OF THE INVENTION

The present disclosure relates to multilayer film for stretch hood application wherein at least one layer comprises a polyolefin composition..

BACKGROUND OF THE INVENTION

Polyolefin film formulations used in industrial stretch hood packaging applications require a suitable compromise between elastic recovery during packaging and load stability during storage and transportation. Elastic recovery in terms of resin design correlates to low or lower crystallinity resins, while load stability correlates to high or higher crystallinity resins.

Industrial stretch hood packaging film structures have been in conmercial use for many years, and typically they are based on ethylene vinyl acetate copolymers (LDPE-EVA) rich film formulations, i.e., formulations of which more than 50 weight percent (wt %) is LDPE-EVA. The typical film design is a 3-layer co-extruded structure based on an EVA core layer (most commonly comprising an EVA with a content of units derived from vinyl acetate (VA) of7.5 to 18 wt %), and skin layers based on metallocene-catalyzed linear low density polyethylene (mLLDPE) rich blends. This type of film structure performs well on packaging lines but at the expense of storage and transportation performance. Specifically, the residual elasticity of such films after the stretching and application process remains high and thus the load stability performance is limited, and EVA resins are weak on-pallet film protection properties such as tear strength performance.

US2011/041460A1 discloses a film for stretch-hood comprising one core or central layer, the layer comprising: a) 20 to 90 wt % of a first polymer component having a MFR in the range of 0.5 to 50 dg/min, a heat of fusion of less than 75 J/g and comprising 65 to 96 wt % of propylene-derived units and 3 to 35 wt % of at least one of ethylene-derived units or units derived from a C4 to C20 alpha-olefin, or mixtures thereof; and b) 80 to 10 wt % of a second polymer component having a melt index in the range of from 0.05 to 20 g/10 min, and comprising ethylene-derived units and 1 to 30 wt % of units derived from a copolymerizable ethylenically unsaturated ester.

SUMMARY OF THE INVENTION

The applicant found that by using a particular polyolefin composition stretch hood film having improved features can be obtained.

Object of the present disclosure is a multilayer blow film for stretch hood comprising one or more layers comprising a polyolefin composition comprising:

from 20 wt% to 80 wt% of Component A)
from 20 wt% to 80 wt% of Component B)
the amounts of A) and B) being referred to the total weight of A)+B) the sum of the amount of A) and B) being 100;
wherein component A) is an ethylene copolymer comprising a recurring unit derived from an ester selected from:

(1) ethylenically unsaturated organic monomer of esters of unsaturated $C_3$-$C_{20}$ monocarboxylic acids and $C_1$ to $C_{24}$ monovalent aliphatic or alicyclic alcohols, and
(2) vinyl esters of saturated $C_2$-$C_{18}$ carboxylic acids;

the ethylene copolymer having a density ranging from 0.920 to 0.935 g/mL; and an MFR (190 °C/2.16 kg) ranging from 0.10 to 20.00 g/10 min;
Component B) is a polyolefin composition comprising:

(i) 5-35% by weight; of a propylene homopolymer containing 5% by weight or less of a fraction soluble in xylene at 25°C ($XS_i$), or a propylene ethylene copolymer containing 90% by weight or more of propylene units; containing 10% by weight or less of a fraction soluble in xylene at 25°C ($XS_i$), both the amount of propylene units and of the fraction $XS_i$ being referred to the weight of (i);
(ii) 20-50% by weight; of a copolymer of ethylene and a $C_3$-$C_8$ alpha-olefin containing from 0.1% to 20% by weight; of alpha-olefin units and containing 25% by weight or less; of a fraction soluble in xylene at 25°C ($XS_{ii}$), both the amount of alpha-olefin units and of the fraction $XS_B$ being referred to the weight of (ii); and
(iii)30-60% by weight of a copolymer of ethylene and propylene containing from 25% to 75% by weight; of ethylene units and containing from 40% to 95% by weight of a fraction soluble in xylene at 25°C ($XS_{iii}$), both the amount of ethylene units and of the fraction $XS_{iii}$ being referred to the weight of (iii);

the amounts of (i), (ii) and (iii) being referred to the total weight of (i) + (ii) + (iii), the sum of the amount of (i), (ii) and (iii) being 100.

DETAILED DESCRIPTION OF THE INVENTION

The applicant found that by using a particular polyolefin composition stretch hood film having improved features can be obtained.

Object of the present disclosure is a multilayer blow film for stretch hood comprising one or more layers comprising a polyolefin composition comprising:

From 20 wt% to 80 wt% , preferably from 30 wt% to 70 wt% more preferably from 40 wt% to 60 wt% of Component A)
From 20 wt% to 80 wt% , preferably from 30 wt% to 70 wt% more preferably from 40 wt% to 60 wt% of Component B)
the amounts of A) and B) being referred to the total weight of A)+B) the sum of the amount of A) and B) being 100;
Wherein component A) is an ethylene copolymer comprising a recurring unit derived from an ester selected from:

(1) ethylenically unsaturated organic monomer of esters of unsaturated $C_3$-$C_{20}$ monocarboxylic acids and $C_1$ to $C_{24}$ monovalent aliphatic or alicyclic alcohols, and
(2) vinyl esters of saturated $C_2$-$C_{18}$ carboxylic acids;

the ethylene copolymer having a density ranging from 0.920 to 0.935 g/mL; and an MFR (190 °C/2.16 kg) ranging from 0.10 to 20.00 g/10 min; preferably from 0.15 to 10.00 g/10 min; more preferably from 0.20 to 5.00 g/10 min;
Component B) is a polyolefin composition comprising:

(i) 5-35% by weight; preferably 10-30 % by weight; more preferably 15-23% by weight of a propylene homopolymer containing 5% by weight or less of a fraction soluble in xylene at 25°C ($XS_i$), or a propylene ethylene copolymer containing 90% by weight or more preferably 95 % by weight or more; preferably 97 % by weight or more of propylene units; containing 10% by weight or less of a fraction soluble in xylene at 25°C ($XS_i$), both the amount of propylene units and of the fraction $XS_i$ being referred to the weight of (i);
(ii) 20-50% by weight; preferably 25-45% by weight; more preferably 30-40 % by weight copolymer of ethylene and a $C_3$-$C_8$ alpha-olefin containing from 0.1% to 20% by weight; preferably from 5% to 15 % by weight; more preferably from 7 % to 12 % by weight of alpha-olefin units and containing 25% by weight or less; preferably from 20% by weight or less; preferably 17% by weight or less of a fraction soluble in xylene at 25°C ($XS_{ii}$), both the amount of alpha-olefin units and of the fraction $XS_B$ being referred to the weight of (ii); and
(iii)30-60% by weight; preferably 35-55% by weight; more preferably 40-50 % by weight of a copolymer of ethylene and propylene containing from 25% to 75% by weight; preferably from 37% to 65% by weight; more preferably from 45% to 58% by weight of ethylene units and containing from 40% to 95% by weight of a fraction soluble in xylene at 25°C ($XS_{iii}$), both the amount of ethylene units and of the fraction $XS_{iii}$ being referred to the weight of (iii);

the amounts of (i), (ii) and (iii) being referred to the total weight of (i) + (ii) + (iii), the sum of the amount of (i), (ii) and (iii) being 100.

In component A preferably the comonomers to be copolymerized with ethylene monomer are: unsaturated carboxylic acid esters represented by acrylates and methacrylates, which include acrylates and methacrylates having a linear or branched alkyl group with 1 to about 24 carbon atoms, such as methyl acrylate, ethyl acrylate, propyl acrylate, n- butyl acrylate, t-butyl acrylate, isobutyl acrylate, pentyl acrylate, isononyl acrylate, hexyl acrylate, 2-methyl-entyl acrylate, octyl acrylate, 2-ethylhexyl acrylate, dodecyl acrylate, methyl methacrylate and ethyl methacrylate; lauryl (meth)acrylate and cyclohexyl (meth)acrylate.

More preferred comonomers are methyl acrylate (EMA copolymers), ethyl acrylate (EEA copolymers) and butyl acrylate (EBA copolymers). n-butyl acrylate being the most preferred.

In component B) component (i) preferably has the melt flow rate (230°C/2.16 kg) ranging between 50 and 200 g/10 min; more preferably between 80 and 170 g/10 min.

In component B) preferably components (i) + (ii) blended together have the melt flow rate (230°C/2.16 kg) comprised between 0.1 and 60 g/10 min. preferably between 1 and 50 g/10 min; more preferably between 8 and 40 g/10 min.

Preferably component (ii) has a density (determined according to ISO 1183 at 23°C) of from 0.900 to 0.965 g/cm$^3$. Component ii) is an ethylene copolymer containing $C_3$-$C_8$ alpha-olefin derived units. Specific examples of such alpha-olefin comonomers are propylene, 1-butene, 1-pentene, 4-methyl-1-pentene, 1-hexene and 1-octene; 1-butene

1-hexene and 1-octene being preferred; 1-butene being the most preferred.

Preferably the polyolefin composition component B) has a melt flow rate (230°C/2.16 kg) comprised between 0.1 and 6.0 g/10 min; preferably between 0.5 and 5.5 g/10 min; more preferably between 1.0 and 5.0 g/10 min.

Preferably the polyolefin composition component B) has an intrinsic viscosity [η] (measured in tetrahydronaphthalene at 135 °C) of the xylene soluble fraction at 25°C comprised between 1.0 to 4.0 dl/g preferably the intrinsic viscosity is comprised between 1.5 and 3.5 dl/g; more preferably the intrinsic viscosity is comprised between 2.0 and 3.0 dl/g.

For the present disclosure the term "copolymer" comprises only polymers containing two kinds of comonomers such as propylene and ethylene or ethylene and 1-butene.

Preferably the multilayer film object of the present disclosure is a three layer ABA film wherein layer B comprises the composition of the present disclosure. Layer A can be made by polymer known in the art normally used for stretch hood blow film such as LLDPE or LLDPE/LDPE blend or even all layers made as B. Particularly preferred are LLDPE resin in particular LLDPE obtained by using metallocene based catalyst such as Exxon Mobil Exceed™ 1018KB.

The multilayer blow film for stretch hood of the present disclosure can be obtained by processes normally known in the art.

The multilayer blow film for stretch hood of the present disclosure has preferably a thickness ranging from 30 to 200 micron; preferably from 50 to 150 micron.

It has been found that the polyolefin compositions B) can be prepared by a sequential polymerization, comprising at least three sequential steps, wherein components (i), (ii) and (iii) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound and an electron donor compound supported on $MgCl_2$.

Preferred organometallic compounds are the aluminum alkyl compounds.

Thus in a preferred embodiment, the polymer composition B) of the present invention is obtainable by using a Ziegler-Natta polymerization catalyst, more preferably a Ziegler-Natta catalyst supported on $MgCl_2$, even more preferably a Ziegler-Natta catalyst comprising the product of reaction of:

1) a solid catalyst component comprising a Ti compound and an electron donor (internal electron-donor) supported on $MgCl_2$;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I):

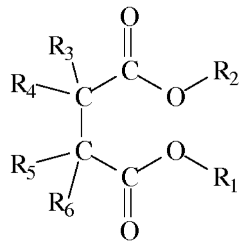

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula $R^1{}_aR^2{}_bSi(OR^3)_c$, where a and b are integer numbers from 0 to 2, c is an integer from 1 to 3 and the sum (a+b+c) is 4; $R^1$, $R^2$ and $R^3$ are alkyl, cycloalkyl or aryl radicals with 1-18 carbon atoms optionally containing heteroatoms.

Useful examples of silicon compounds are (tert-butyl)$_2$Si($OCH_3$)$_2$, (cyclohexyl)(methyl)Si ($OCH_3$)$_2$, (phenyl)$_2$Si($OCH_3$)$_2$ and (cyclopentyl)$_2$Si($OCH_3$)$_2$.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.
the polyolefin compositions B) can also prepared as a physical blend of the separately-prepared components rather than as a reactor blend.

The following examples are given in order to illustrate, but not limit the present disclosure.

EXAMPLES

**CHARACTERIZATIONS**

**Xylene-soluble faction at 25°C (XS or Xs)**

The Xylene Soluble fraction was measured according to ISO 16152, 2005, but with the following deviations (between brakets what prescribed by the ISO 16152)
The solution volume is 250 ml (200 ml);

During the precipitation stage at 25°C for 30 min, the solution, for the final 10 minutes, is kept under agitation by a magnetic stirrer (30 min, without any stirring at all);
The final drying step is done under vacuum at 70°C (100 °C);
The content of said xylene-soluble fraction is expressed as a percentage of the original 2.5 grams and then, by difference (complementary to 100), the xylene unsoluble %;
XS of components B) and C) have been calculated by using the formula;

$$XS_{tot}=WaXS_A+WbXS_B+WcXS_C$$

wherein Wa, Wb and Wc are the relative amount of components A, B and C (A+B+C=1)

**Melt Flow Rate**

Measured according to ISO 1133 at 230°C with a load of 2.16 kg, unless otherwise specified.

**Intrinsic viscosity IV**

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [$\eta$].

**Comonomer (C2 and C4) content determinated by using $^{13}$C NMR**

$^{13}$C NMR spectra of base polymers and their fractions were acquired on a Bruker AV600 spectrometer equipped with cryo probe, operating 150.91 MHz MHz in the Fourier transform mode at 120 °C. The peak of the S$\delta\delta$ carbon (nomenclature according C.J. Carman, R.A. Harrington and C.E. Wilkes, Macromolecules, 10, 3, 536 (1977)) was used as internal reference at 29.7 ppm. About 30 mg of sample were dissolved in 0.5 ml of 1,1,2,2 tetrachloro ethane d2 at 120 °C. Each spectrum was acquired with a 90 ° pulse, 15 seconds of delay between pulses and CPD to remove 1H-$^{13}$C coupling. 512 transients were stored in 65 K data points using a spectral window of 9000 Hz. The assignments of the spectra were made according to [M. Kakugo, Y. Naito, K. Mizunuma and T. Miyatake, Macromolecules, 16, 4, 1160 (2082)] and [E.T .Hsieh, J.C. Randall, Macromolecules, 15, 353-360 (1982)].

Triad distribution was obtained using the following relations:

$$PPP = 100\ I_{10} /\Sigma$$

$$PPE = 100\ I_6 /\Sigma EPE = 100\ I_5 /\Sigma$$

$$BBB = 100\ I_3 /\Sigma$$

$$BBE = 100\ I_2 /\Sigma$$

$$EBE = 100\ I_{11} /\Sigma$$

$$XEX =100\ I_{12} /\Sigma$$

$$XEE = 100\ (I_1 + I_4)/\Sigma$$

$$EEE = 100\ (0.5\ I_9 + 0.25\ (I_7 + I_8))/\Sigma$$

wherein

$$\Sigma = I_1 + I_2 + I_3 + I_4 + I_5 + I_6 + 0.25\ I_7 + 0.25\ I_8 + 0.5\ I_9 + I_{10} + I_{11} + I_{12}$$

and wherein X can be propylene (P) or 1-butene (B), and $I_1$ to $I_{12}$ are the areas of the corresponding carbon atoms as reported below (only selected triads and assignements being reported):

| Number | Chemical Shift (ppm) | Carbon | Sequence |
|---|---|---|---|
| $I_1$ | 37.64 - 37.35 | $S_{\alpha\delta}$ | PEE |
| $I_2$ | 37.35 - 37.15 | $T_{\beta\delta}$ | BBE |
| $I_3$ | 35.27 - 34.92 | $T_{\beta\beta}$ | BBB |
| $I_4$ | 34.39 - 33.80 | $S_{\alpha\delta}$ | BEE |
| $I_5$ | 33.13 | $T_{\delta\delta}$ | EPE |
| $I_6$ | 30.93 - 30.77 | $T_{\beta\delta}$ | PPE |
| $I_7$ | 30.39 | $S_{\gamma\delta}$ | BEEE |
| $I_8$ | 30.29 | $S_{\gamma\delta}$ | PEEE |
| $I_9$ | 29.97 | $S_{\delta\delta}$ | EEE |
| $I_{10}$ | 29.14 -28.31 | $T_{\beta\beta}$ | PPP |
| $I_1$ | 26.70 - 26.55 | $2B_2$ | EBE |
| $I_{12}$ | 24.88 - 24.14 | $S_{\beta\beta}$ | XEX |

The molar content of ethylene (E), of propylene (P) and of 1-butene (B) is obtained from triads using the following relations:

$$E\ (m\%) = EEE + XEE + XEX$$

$$P\ (m\%) = PPP + PPE + EPE$$

$$B\ (m\%) = BBB + BBE + EBE$$

Other comonomers can be easily determined by using NMR procedures known in the art.

**Elmendorf tear resistance on film is measured using the ASTM D1922**

**Stress retention test**

Stress retention test has been carried out according to ASTM D5459-95 reapproved 2012 with an extention of 100% and 60 seconds of relaxation.

**Examples 1 - Preparation of polyolefin composition component B**

Catalyst precursor

The solid catalyst component used in polymerization is a Ziegler-Natta catalyst component supported on magnesium chloride, containing titanium and diisobutylphthalate as internal donor, prepared as follows. An initial amount of micro spheroidal MgC12·2.8C2H5OH was prepared according to the method described in Example 2 of USP 4,399,054 but operating at 3,000 rpm instead of 10,000. The so obtained adduct was then subject to thermal dealcoholation at increasing temperatures from 30 to 130°C operating in nitrogen current until the molar alcohol content per mol of Mg is 1.16. Into a 1000 mL four-necked round flask, purged with nitrogen, 500 mL of TiCl4 were introduced at 0°C. While stirring, 30 grams of the micro spheroidal MgCl2·1.16C2H5OH adduct (prepared as described above) were added. The temperature was raised to 120°C and kept at this value for 60 minutes. During the temperature increase, an amount of diisobutylphthalate was added such as to have a Mg/ diisobutylphthalate molar ratio of 18. After the mentioned 60 minutes, the stirring was stopped, the liquid siphoned off and the treatment with TiCl4 was repeated at 100°C for 1 hour in the presence of an amount of diisobutylphthalate such as to have a Mg/ diisobutylphthalate molar ratio of 27. After that time the stirring was stopped, the liquid siphoned off and the treatment with TiCl4 was repeated at 100°C for 30 min. After sedimentation and siphoning at 85°C the solid was washed six times with anhydrous hexane (6 x 100 ml) at 60 °C.

Catalyst system and prepolymerization

Before introducing it into the polymerization reactors, the solid catalyst component described above is contacted at 30 °C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio be equal to 4.

The catalyst system is then subjected to prepolymerization by maintaining it in suspension in liquid propylene at 50 °C for about 75 minutes before introducing it into the first polymerization reactor.

Polymerization

The polymerization is carried out in continuous in a series of three gas-phase reactors equipped with devices to transfer the product from the first reactor to the second one. Into the first gas phase polymerization reactor a propylene-based polymer (i) is produced by feeding in a continuous and constant flow the prepolymerized catalyst system, hydrogen (used as molecular weight regulator) and propylene all in the gas state. The propylene-based polymer (i) coming from the first reactor is discharged in a continuous flow and, after having been purged of unreacted monomers, is introduced, in a continuous flow, into the second gas phase reactor, together with quantitatively constant flows of hydrogen and ethylene, all in the gas state. In the second reactor a copolymer of ethylene (ii) is produced. The product coming from the second reactor is discharged in a continuous flow and, after having been purged of unreacted monomers, is introduced, in a continuous flow, into the third gas phase reactor, together with quantitatively constant flows of hydrogen, ethylene and propylene all in the gas state. In the third reactor an ethylene-propylene polymer (iii) is produced. Polymerization conditions, molar ratio of the reactants and composition of the copolymers obtained are shown in Table 1. The polymer particles exiting the third reactor are subjected to a steam treatment to remove the reactive monomers and volatile substances, and then dried. Thereafter the polymer particles are mixed with a usual stabilizing additive composition in a twin screw extruder Berstorff ZE 25 (length/diameter ratio of screws: 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition is made of the following components:

- 0.1% by weight of Irganox® 1010;
- 0.1% by weight of Irgafos® 168;
- 0.04% by weight of DHT-4A (hydrotalcite);

all percent amounts being referred to the total weight of the polymer and stabilizing additive composition.

The said Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite. The characteristics relating to the polymer composition, reported in Table 2, are obtained from measurements carried out on the so extruded polymer, which constitutes the stabilized ethylene polymer composition according to the exemplary embodiments disclosed herein.

Table 1 - Polymerization conditions

| Example | | 1 |
|---|---|---|
| 1st Reactor - component (i) | | |
| Temperature | °C | 60 |
| Pressure | barg | 16 |
| $H_2/C_3$- | mol. | 0.24 |
| Split | wt% | 22 |
| Xylene soluble of (i) ($XS_i$) | wt% | 4.2 |
| MFR of (i) | g/10 min. | 110 |
| 2nd Reactor - component (ii) | | |
| Temperature | °C | 80 |
| Pressure | barg | 18 |
| $H_2/C_2$- | mol. | 0.81 |
| $C_4$-/($C_2$- + $C_4$-) | mol. | 0.25 |
| $C_2$-/($C_2$- + $C_3$-) | mol. | 0.98 |
| Split | wt% | 32 |
| $C_2$- content of i * | wt% | 90 |
| $C_4$- content of i * | wt% | 10 |
| Xylene soluble of i ($XS_i$) * | wt% | 16.0 |
| Xylene soluble of (i + i) | wt% | 12.0 |
| MFR of (i + ii) | g/10 min. | 35.9 |
| 3rd Reactor - component (iii) | | |
| Temperature | °C | 65 |
| Pressure | barg | 18 |
| $H_2/C_2$- | mol. | 0.17 |
| $C_2$-/($C_2$- + $C_3$-) | mol. | 0.42 |
| Split | wt% | 46 |
| $C_2$- content of iii * | wt% | 52 |
| Xylene soluble of (iii) ($Xs_{iii}$)* | wt% | 83 |
| C2- = ethylene; C3- = propylene; C4- = 1-butene (IR); split = amount of polymer produced in the concerned reactor. * Calculated values. | | |

Table 2 properties of component B

| Example | | 1 |
|---|---|---|
| component i | | |
| C2 content | wt% | 0 |

(continued)

| | | |
|---|---|---|
| Example | | 1 |
| component i | | |
| XSi | wt% | 4.2 |
| MFR | g/10 min | 110 |
| split | wt% | 22 |
| component ii | | |
| XSi* | wt% | 16 |
| C2 content* | wt% | 90.0 |
| C4 content* | wt% | 10.0 |
| split | wt% | 32 |
| MFR i+ii | g/10 min | 35.9 |
| Component iii | | |
| XSi* | wt% | 83 |
| C2 content* | wt% | 52 |
| split | wt% | 446 |
| total composition | | |
| MFR | g/10 min | 1.61 |
| IV on soluble in Xylene | dl/g | 2.4 |

Component A) is a commercial low density ethylene/n-butyl acrylate copolymer sold by Lyondellbasell under the tradename Lucalen A2540D. The ethylene copolymer has a density of 0.923 g/cm$^3$; MFR (190 °C/2.16 kg) of 0.25 g/10 min and a nominal nBA (n-butyl acrylate) content of 6.5%wt.

The polymer used in comparative example 2 is and ethylene vinyl acetate copolymer, EVA, sold by Versalis under the trademane Greenflex FC 45 F. The polymer has a Melt Flow Rate (190 °C/2.16 kg) of 0.3 g/10 min; density 0.935 g/cm$^3$ and a vinyl acetate content of 14 wt%.

Layer A of the stretch hood film have been made with LLDPE ExxonMobil Exceed 1018KB. An LLDPE polymer obtained with metallocene-based catalyst.

**Stretch hood film.**

A three layer ABA 100 micron thick stretch hood films have been produced. Layer A being 20 micron thick made of LLDE ExxonMobil Exceed 1018KB. In example 1 layer B is made by using a blend of 50 wt% of Lucalen A2540D and 50 wt% of the composition obtained in example 1. In comparative example 2 layer B is made by using Greenflex FC 45 F. Both B layer being 60 micron thick. The results of the analysis are reported on table 2.

Table 2

| stretch hood film | | example 1 | comparative 2 |
|---|---|---|---|
| layer A | | | |
| thick | | 20 | 20 |
| Exceed 1018KB | wt% | 100 | 100 |
| layer B | | | |
| thick | | 60 | 60 |
| Greenflex FC 45 F | wt% | 0 | 100 |
| Lucalen A2540D | wt% | 50 | 0 |

(continued)

| | | | |
|---|---|---|---|
| layer B | | | |
| composition 1 | wt% | 50 | 0 |
| property of film | | | |
| dart test | g | >1450 | >1450 |
| ELMENDORF TD | gf | 1305 | 1174 |
| Stress Retention after 180 sec | MPa | 3.62 | 3.68 |

From table 2 clearly results that the stretch hood film according to the present disclosure shows an higher Elmendorf TD and keep substantially the same stress after 180 seconds with respect to the comparative example that represent the state of the art.

## Claims

1. A multilayer blow film for stretch hood comprising one or more layers comprising a polyolefin composition comprising: from 20 wt% to 80 wt% of Component A) and from 20 wt% to 80 wt% of Component B); the amounts of A) and B) being referred to the total weight of A)+B) the sum of the amount of A) and B) being 100;
wherein component A) is an ethylene copolymer comprising a recurring unit derived from an ester selected from:

   (1) ethylenically unsaturated organic monomer of esters of unsaturated $C_3$-C20 monocarboxylic acids and $C_1$ to $C_{24}$ monovalent aliphatic or alicyclic alcohols, and
   (2) vinyl esters of saturated $C_2$-$C_{18}$ carboxylic acids;

   the ethylene copolymer having a density ranging from 0.920 to 0.935 g/mL; and an MFR (190 °C/2.16 kg) ranging from 0.10 to 20.00 g/10 min;
   Component B) is a polyolefin composition comprising:

   (i) 5-35% by weight; of a propylene homopolymer containing 5% by weight or less of a fraction soluble in xylene at 25°C ($XS_i$), or a propylene ethylene copolymer containing 90% by weight or more of propylene units; containing 10% by weight or less preferably 5% by weight or less of a fraction soluble in xylene at 25°C ($XS_i$), both the amount of propylene units and of the fraction $XS_i$ being referred to the weight of (i);
   (ii) 20-50% by weight; of a copolymer of ethylene and a $C_3$-$C_8$ alpha-olefin containing from 0.1% to 20% by weight of alpha-olefin units and containing 25% by weight or less; of a fraction soluble in xylene at 25°C ($XS_{ii}$), both the amount of alpha-olefin units and of the fraction $XS_B$ being referred to the weight of (ii); and
   (iii) 30-60% by weight of a copolymer of ethylene and propylene containing from 25% to 75% by weight; of ethylene units and containing from 40% to 95% by weight of a fraction soluble in xylene at 25°C ($XS_{iii}$), both the amount of ethylene units and of the fraction $XS_{iii}$ being referred to the weight of (iii);

   the amounts of (i), (ii) and (iii) being referred to the total weight of (i) + (ii) + (iii), the sum of the amount of (i), (ii) and (iii) being 100.

2. The multilayer blow film for stretch hood according to claim 1 wherein in component B) component i) is a propylene homopolymer.

3. The multilayer blow film for stretch hood according to claims 1 or 2 wherein component A) ranges from 60 wt% to 40 wt% and component B) ranges from 40 wt% to 60 wt%.

4. The multilayer blow film for stretch hood according to anyone of claims 1-3 wherein in component B) component i) ranges from 10% to 30 % by weight; component ii) ranges from 25% to 45 % by weight; and component iii) ranges from 35% to 55 % by weight.

5. The multilayer blow film for stretch hood according to anyone of claims 1-4 wherein in component B) component (i) has the melt flow rate (230°C/2.16 kg) ranging between 50 and 200 g/10 min.

6. The multilayer blow film for stretch hood according to anyone of claims 1-5 wherein in component B) components (i) + (ii) blended together have the melt flow rate (230°C/2.16 kg) comprised between 0.1 and 60 g/10 min.

7. The multilayer blow film for stretch hood according to anyone of claims 1-6 wherein the polyolefin composition component B) has a melt flow rate (230°C/2.16 kg) comprised between 0.1 and 6.0 g/10 min.

8. The multilayer blow film for stretch hood according to anyone of claims 1-7 wherein the polyolefin composition component B) has an intrinsic viscosity [η] (measured in tetrahydronaphthalene at 135 °C) of the xylene soluble fraction at 25°C comprised between 1.0 to 4.0 dl/g.

9. The multilayer blow film for stretch hood according to anyone of claims 1-8 wherein the film is a three layer ABA film wherein layer B comprises the composition of claims 1-8.

10. The multilayer blow film for stretch hood according to anyone of claims 1-9 wherein the film is a three layer ABA film wherein layer A comprises LLDPE copolymers or LLDPE/LDPE blend.

11. The multilayer blow film for stretch hood according to anyone of claims 1-10 having a thickness ranging from 30 to 200 micron.

12. The multilayer blow film for stretch hood according to anyone of claims 1-8 wherein in component B) component ii) is a copolymer of ethylene and a comonomer selected from 1-butene, 1-hexene or 1-octene.

13. The multilayer blow film for stretch hood according to anyone of claims 1-8 wherein in component B) component ii) is a copolymer of ethylene and-$C_3$-$C_8$ alpha-olefin containing from 5% to 15 % by weight of alpha-olefin units;

14. The multilayer blow film for stretch hood according to anyone of claims 1-8 wherein in component B) component iii) is a copolymer of ethylene and propylene containing from 37% to 65% by weight of ethylene units.

15. The multilayer blow film for stretch hood according to anyone of claims 1-8 wherein component A) has an MFR (190 °C/2.16 kg) ranging from 0.15 to 10.00 g/10 min.

**Patentansprüche**

1. Mehrschichtige Blasfolie für Stretchhauben, umfassend eine oder mehrere Schichten, umfassend eine Polyolefinzusammensetzung, umfassend: 20 Gew.% bis 80 Gew.% Komponente A) und 20 Gew.% und 80 Gew.% Komponente B); wobei sich die Mengen an A) und B) auf das Gesamtgewicht von A)+B) beziehen, wobei die Summe der Mengen von A) und B) 100 ergibt; wobei Komponente A) ein Ethylencopolymer ist, das eine sich wiederholende Einheit umfasst, welche von einem Ester abgeleitet ist, der ausgewählt ist aus:

    (1) ethylenisch ungesättigtem organischem Monomer von Estern von ungesättigten $C_3$-bis $C_{20}$-Monocarbonsäuren und einwertigen aliphatischen oder alicyclischen $C_1$- bis $C_{24}$-Alkoholen, und
    (2) Vinylestern von gesättigten $C_2$- bis $C_{18}$-Carbonsäuren;

    wobei das Ethylencopolymer eine Dichte im Bereich von 0,920 bis 0,935 g/mL aufweist; und eine MFR (190 °C/2,16 kg) im Bereich von 0,10 bis 20,00 g/10 min aufweist;
    wobei Komponente B) eine Polyolefinzusammensetzung ist, umfassend:

    (i) 5 bis 35 Gew.% von einem Propylenhomopolymer, das 5 Gew.% oder weniger von einer in Xylol bei 25 °C ($XS_i$) löslichen Fraktion enthält, oder einem Propylen-Ethylen-Copolymer, das 90 Gew.% oder mehr Propyleneinheiten enthält; 10 Gew.% oder weniger, vorzugsweise 5 Gew.% oder weniger von einer in Xylol bei 25 °C löslichen Fraktion ($XS_i$) enthält, wobei sich sowohl die Menge der Propyleneinheiten als auch diejenige der Fraktion $XS_i$ auf das Gewicht von (i) beziehen;
    (ii) 20 bis 50 Gew.% von einem Copolymer von Ethylen und einem $C_3$- bis $C_8$-alpha-Olefin, das 0,1 Gew.% bis 20 Gew.% alpha-Olefineinheiten enthält und 25 Gew.% oder weniger von einer in Xylol bei 25 °C löslichen Fraktion ($XS_{ii}$) enthält, wobei sich sowohl die Menge der alpha-Olefineinheiten als auch diejenige der Fraktion $XS_B$ auf das Gewicht von (ii) beziehen;
    (iii) 30 bis 60 Gew.% von einem Copolymer von Ethylen und Propylen, das 25 Gew.% bis 75 Gew.% Ethyleneinheiten enthält und 40 Gew.% bis 95 Gew.% von einer in Xylol bei 25 °C löslichen Fraktion ($XS_{iii}$) enthält, wobei sich sowohl die Menge der Ethyleneinheiten als auch diejenige der Fraktion $XS_{iii}$ auf das Gewicht von (iii) beziehen;

die Mengen von (i), (ii) und (iii) sich auf das Gesamtgewicht von (i) + (ii) + (iii) beziehen, wobei die Summe der Mengen von (i), (ii) und (iii) 100 ergibt.

**2.** Mehrschichtige Blasfolie für Streckhauben nach Anspruch 1, wobei in Komponente B) Komponente i) ein Propylenhomopolymer ist.

**3.** Mehrschichtige Blasfolie für Streckhauben nach den Ansprüchen 1 oder 2, wobei Komponente A) im Bereich von 60 Gew.% bis 40 Gew.% liegt und Komponente B) im Bereich von 40 Gew.% bis 60 Gew.% liegt.

**4.** Mehrschichtige Blasfolie für Streckhauben nach einem der Ansprüche 1 bis 3, wobei Komponente i) in Komponente B) im Bereich von 10 Gew.% bis 30 Gew.% liegt; Komponente ii) im Bereich von 25 Gew.% bis 45 Gew.% liegt; und Komponente iii) im Bereich von 35 Gew.% bis 55 Gew.% liegt.

**5.** Mehrschichtige Blasfolie für Streckhauben nach einem der Ansprüche 1 bis 4, wobei Komponente (i) in Komponente B) eine Schmelzflussrate (230 °C/2,16 kg) im Bereich von 50 bis 200 g/10 min aufweist.

**6.** Mehrschichtige Blasfolie für Streckhauben nach einem der Ansprüche 1 bis 5, wobei in Komponente B) Komponenten (i) + (ii) zusammengemischt eine Schmelzflussrate (230 °C/2,16 kg) aufweisen, die zwischen 0,1 bis 60 g/10 min liegt.

**7.** Mehrschichtige Blasfolie für Streckhauben nach einem der Ansprüche 1 bis 6, wobei Komponente B) der Polyolefinzusammensetzung eine Schmelzflussrate (230 °C/2,16 kg) aufweist, die zwischen 0,1 bis 6,0 g/10 min liegt.

**8.** Mehrschichtige Blasfolie für Streckhauben nach einem der Ansprüche 1 bis 7, wobei die Komponente B) der Polyolefinzusammensetzung eine Grenzviskosität [η] (gemessen in Tetrahydronaphthalin bei 135 °C) der in Xylol löslichen Fraktion bei 25 °C aufweist, die zwischen 1,0 und 4,0 dl/g liegt.

**9.** Mehrschichtige Blasfolie für Streckhauben nach einem der Ansprüche 1 bis 8, wobei die Folie eine dreischichtige ABA-Folie ist, in der Schicht B die Zusammensetzung gemäß den Ansprüchen 1 bis 8 umfasst.

**10.** Mehrschichtige Blasfolie für Streckhauben nach einem der Ansprüche 1 bis 9, wobei die Folie eine dreischichtige ABA-Folie ist, in der Schicht A LLDPE-Copolymere oder LLDPE/ LDPE-Gemisch umfasst.

**11.** Mehrschichtige Blasfolie für Streckhauben nach einem der Ansprüche 1 bis 10 mit einer Dicke im Bereich von 30 bis 200 Mikrometern.

**12.** Mehrschichtige Blasfolie für Streckhauben nach einem der Ansprüche 1 bis 8, wobei Komponente ii) in Komponente B) ein Copolymer von Ethylen und einem Comonomer ausgewählt aus 1-Buten, 1-Hexen oder 1-Octen ist.

**13.** Mehrschichtige Blasfolie für Streckhauben nach einem der Ansprüche 1 bis 8, wobei Komponente ii) in Komponente B) ein Copolymer von Ethylen und einem $C_3$- bis $C_8$-alpha-Olefin ist, das 5 Gew.% bis 15 Gew.% alpha-Olefineinheiten umfasst.

**14.** Mehrschichtige Blasfolie für Streckhauben nach einem der Ansprüche 1 bis 8, wobei Komponente iii) in Komponente B) ein Copolymer von Ethylen und Propylen ist, das 37 Gew.% bis 65 Gew.% Ethyleneinheiten umfasst.

**15.** Mehrschichtige Blasfolie für Streckhauben nach einem der Ansprüche 1 bis 8, wobei Komponente A) eine MFR (190 °C/2,16 kg) im Bereich von 0,15 bis 10,00 g/10 min aufweist.

## Revendications

**1.** Film soufflé multicouche pour housse étirable comprenant une ou plusieurs couches comprenant une composition polyoléfinique comprenant : 20% en poids à 80% en poids de constituant A) et 20% en poids à 80% en poids de constituant B) ; les quantités de A) et de B) se référant au poids total de A) + B), la somme des quantités de A) et

de B) valant 100 ;
le constituant A) étant un copolymère d'éthylène comprenant un motif récurrent dérivé d'un ester choisi parmi :

(1) un monomère organique éthyléniquement insaturé d'esters d'acides monocarboxyliques insaturés en $C_3$-$C_{20}$ et d'alcools aliphatiques ou alicycliques monovalents en $C_1$ à $C_{24}$ et
(2) les esters vinyliques d'acides carboxyliques saturés en $C_2$-$C_{18}$ ;

le copolymère d'éthylène présentant une densité de 0,920 à 0,935 g/ml ; et un MFR (indice de fluidité à chaud) (190°C/2,16 kg) de 0,10 à 20,00 g/10 min ;
le constituant B) étant une composition polyoléfinique comprenant :

(i) 5-35% en poids d'un homopolymère de propylène contenant 5% en poids ou moins d'une fraction soluble dans le xylène à 25°C ($XS_i$) ou d'un copolymère de propylène-éthylène contenant 90% en poids ou plus de motifs de propylène ; contenant 10% en poids ou moins, préférablement 5% en poids ou moins, d'une fraction soluble dans le xylène à 25°C ($XS_i$), la quantité à la fois de motifs de propylène et de la fraction $XS_i$ se référant au poids de (i) ;
(ii) 20-50% en poids d'un copolymère d'éthylène et d'une alpha-oléfine en $C_3$-$C_8$ contenant 0,1% à 20% en poids de motifs alpha-oléfiniques et contenant 25% en poids ou moins d'une fraction soluble dans le xylène à 25°C (XSii), la quantité à la fois de motifs alpha-oléfiniques et de la fraction $XS_B$ se référant au poids de (ii) ; et
(iii) 30-60% en poids d'un copolymère d'éthylène et de propylène contenant 25% à 75% en poids de motifs d'éthylène et contenant 40% à 95% en poids d'une fraction soluble dans le xylène à 25°C ($XS_{iii}$), la quantité à la fois de motifs d'éthylène et de la fraction $XS_{iii}$ se référant au poids de (iii) ;

les quantités de (i), de (ii) et de (iii) se référant au poids total de (i) + (ii) + (iii), la somme des quantités de (i), de (ii) et de (iii) valant 100.

**2.** Film soufflé multicouche pour housse étirable selon la revendication 1, le constituant i) dans le constituant B) étant un homopolymère de propylène.

**3.** Film soufflé multicouche pour housse étirable selon les revendications 1 ou 2, le constituant A) se situant dans la plage de 60% en poids à 40% en poids et le constituant B) se situant dans la plage de 40% en poids à 60% en poids.

**4.** Film soufflé multicouche pour housse étirable selon l'une quelconque des revendications 1 à 3, le constituant i) dans le constituant B) se situant dans la plage de 10% à 30% en poids ; le constituant ii) se situant dans la plage de 25% à 45% en poids ; et le constituant iii) se situant dans la plage de 35% à 55% en poids.

**5.** Film soufflé multicouche pour housse étirable selon l'une quelconque des revendications 1 à 4, le constituant (i) dans le constituant B) présentant un indice de fluidité à chaud (230°C/2,16 kg) dans une plage entre 50 et 200 g/10 min.

**6.** Film soufflé multicouche pour housse étirable selon l'une quelconque des revendications 1 à 5, les constituants (i) + (ii) dans le constituant B) mélangés ensemble présentant un indice de fluidité à chaud (230°C/2,16 kg) dans la plage entre 0,1 et 60 g/10 min.

**7.** Film soufflé multicouche pour housse étirable selon l'une quelconque des revendications 1 à 6, le constituant B) de composition polyoléfinique présentant un indice de fluidité à chaud (230°C/2,16 kg) dans la plage entre 0,1 et 6,0 g/10 min.

**8.** Film soufflé multicouche pour housse étirable selon l'une quelconque des revendications 1 à 7, le constituant B) de composition polyoléfinique possédant une viscosité intrinsèque [η] (mesurée dans le tétrahydronaphtalène à 135°C) de la fraction soluble dans le xylène à 25°C dans la plage entre 1,0 et 4,0 dl/g.

**9.** Film soufflé multicouche pour housse étirable selon l'une quelconque des revendications 1 à 8, le film étant un film à trois couches ABA, la couche B comprenant la composition des revendications 1-8.

**10.** Film soufflé multicouche pour housse étirable selon l'une quelconque des revendications 1 à 9, le film étant un film à trois couches ABA, la couche A comprenant des copolymères de LLDPE ou un mélange de LLDPE/LDPE.

**11.** Film soufflé multicouche pour housse étirable selon l'une quelconque des revendications 1-10, présentant une épaisseur dans la plage de 30 à 200 microns.

**12.** Film soufflé multicouche pour housse étirable selon l'une quelconque des revendications 1-8, le constituant ii) dans le constituant B) étant un copolymère d'éthylène et d'un comonomère choisi parmi le 1-butène, le 1-hexène ou le 1-octène.

**13.** Film soufflé multicouche pour housse étirable selon l'une quelconque des revendications 1-8, le constituant ii) dans le constituant B) étant un copolymère d'éthylène et d'alpha-oléfine en $C_3$-$C_8$ contenant 5% à 15% en poids de motifs alpha-oléfiniques.

**14.** Film soufflé multicouche pour housse étirable selon l'une quelconque des revendications 1 à 8, le constituant iii) dans le constituant B) étant un copolymère d'éthylène et de propylène contenant 37% à 65% en poids de motifs d'éthylène.

**15.** Film soufflé multicouche pour housse étirable selon l'une quelconque des revendications 1-8, le constituant A) présentant un MFR (190°C/2,16 kg) de 0,15 à 10,00 g/10 min.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2011041460 A1
- US 4399054 A
- EP 45977 A
- EP 361493 A
- EP 728769 A
- US P4399054 A


### Non-patent literature cited in the description


- **HUGGINS, M.L.** *J. Am. Chem. Soc.,* vol. 1942 (64), 2716
- **C.J. CARMAN ; R.A. HARRINGTON ; C.E. WILKES.** *Macromolecules,* 1977, vol. 10 (3), 536
- **M. KAKUGO ; Y. NAITO ; K. MIZUNUMA ; T. MIYATAKE.** *Macromolecules,* vol. 16 (4), 1160
- **E.T .HSIEH ; J.C. RANDALL.** *Macromolecules,* 1982, vol. 15, 353-360